# EUROPEAN PATENT APPLICATION

(11) **EP 3 572 260 A1**
(43) Date of publication of application: **27.11.2019**
(21) Application number: 19171146.4
(22) Date of filing: 25.04.2019
(51) Int. Cl.: B60K 1/00, B60K 6/405

(54) **STRUCTURE OF MOUNTING POWER CONVERTER IN VEHICLE**

(30) Priority: 24.05.2018 JP 2018099880
(71) Applicant: TOYOTA JIDOSHA KABUSHIKI KAISHA, Toyota-shi, Aichi-ken 471 8571 (JP)
(72) Inventor: MARUKAWA, Naoki, Toyota-shi, Aichi-ken,, 471-8571 (JP); YAMANAKA, Kenshi, Toyota-shi, Aichi-ken,, 471-8571 (JP)
(74) Representative: Kuhnen & Wacker Patent- und Rechtsanwaltsbüro PartG mbB

(57) **Abstract**

A structure (2) of mounting a power converter (20) in a vehicle (100) is disclosed herein. The structure (2) may include a converter casing (10) of the power converter (20), the converter casing (10) including legs (12, 13) connected to the converter casing (10) and extending downward; and a motor housing (30) that houses a traction motor (3). The legs (12, 13) may be integrally configured with the converter casing (10). Lower ends of the legs (12, 13) may be fixed to an upper portion of the motor housing (30) with a space provided between the motor housing (30) and a lower surface of the converter casing (10). A weak portion (123) may be provided in at least one of the legs (12, 13), and the weak portion (123) may be configured to break or deform prior to break of fixed portions between the legs (12, 13) and the motor housing (30) when crash load is applied to the converter casing (10).

## Description

### TECHNICAL FIELD

The teaching disclosed herein relates to a structure of mounting a power converter in a vehicle. The power converter is configured to convert electric power of a DC power source into driving power for an electric traction motor.

### BACKGROUND

An electric vehicle (including a hybrid vehicle and a fuel-cell vehicle) includes a power converter configured to convert electric power of a DC power source into driving power for a traction motor. Examples of such power converter are described in Japanese Patent Application Publication No. 2016-140200 (referred to as Patent Literature 1), Japanese Patent Application Publication No. 2014-114870 (referred to as Patent Literature 2), and Japanese Patent Application Publication No. 2013-193634 (referred to as Patent Literature 3). Since it is desirable that a power cable for transmitting electric power to a traction motor is short, a power converter may be disposed on or above a motor housing that houses the traction motor. The power converter in Patent Literature 1 is fixed directly on a motor housing. The power converter described in each of Patent Literatures 2, 3 is supported above a motor housing. Each of the power converters of Patent Literatures 2, 3 is supported above the motor housing by brackets with a space provided between the power converter and the motor housing. Fixing a converter casing of the power converter to the motor housing via the brackets, without allowing the converter casing to contact the motor housing, suppresses vibrations transmitted from the motor housing to the power converter. Patent Literature 2 describes that vibration isolators are interposed between the casing of the power converter and the brackets. A structure of mounting the power converter in a vehicle described in each of Patent Literatures 2, 3 adopts the brackets that are separate components from the casing of the power converter.

### SUMMARY

The disclosure herein provides a structure of mounting a power converter above a motor housing at a lower cost than that in a case of using a bracket that is a separate component from a converter casing.

The disclosure herein provides a structure of mounting a power converter, which is configured to convert DC power of a power source into driving power for a traction motor, in a vehicle. A converter casing of the power converter may include legs extending downward from the converter casing. The legs may be integrally configured with the converter casing. Lower ends of the legs may be fixed to an upper portion of a motor housing that houses the traction motor, with a space provided between the motor housing and a lower surface of the converter casing. A weak portion may be provided in at least one of the legs, and the weak portion may be configured to break or deform prior to break of fixed portions between the legs and the motor housing when crash load is applied to the converter casing.

The structure disclosed herein adopts the converter casing including the legs, instead of a bracket that is a separate component from the converter casing. The legs are integrally configured with the converter casing, and thus they can be formed simultaneously with the converter casing. Therefore, the converter casing including the legs can be realized at a lower cost than that in a case of adopting an independent bracket.

Moreover, in the above-described structure, when a crash occurs, the at least one of the legs may breaks or deforms at the weak portion prior to break of the fixed portions between the legs and the motor housing. Accordingly, break of the motor housing (the fixed portions) is prevented. If break of the motor housing that houses the traction motor occurs, an internal high-voltage component (a component of the traction motor) may thereby be exposed. The structure disclosed herein may avoid the break of the motor housing.

Further, break or deformation of the at least one of the legs causes the converter casing to move, and an impact applied to the converter casing is thereby mitigated. When the at least one of the legs breaks or deforms, a load applied to the other legs increases, as a result of which the other legs may break or deform successively in a chain-reaction manner. Consequently, the converter casing is moved and an impact on the power converter is mitigated. The weak portion may be provided in each of two or more of the legs. The weak portion may typically be a notch provided in the at least one of the legs.

In the structure disclosed herein, vibration isolators may be provided between the motor housing and the legs of the converter casing. The vibration isolators reduce vibrations transmitted from the motor housing to the converter casing.

Each of the lower ends of the legs may be fixed to the motor housing with a bolt, and the bolts may be fixed to the motor housing such that a longitudinal direction of the bolts is directed to a vertical direction. Alternatively, the bolts that fix the lower ends of the legs may be fixed to the motor housing such that the longitudinal direction of the bolts is directed to a lateral direction of the vehicle. In either of these cases, work for inserting the bolts is facilitated.

The bolts that fix the lower ends of the legs may be fixed to the motor housing such that the longitudinal direction of the bolts is directed to a front-back direction of the vehicle. In this case, each of bolts insertion portions at the lower ends of the legs enlarges in the lateral direction of the vehicle and the vertical direction. The bolt insertion portions do not need to enlarge in the front-back direction of the vehicle, so an overall length of the converter casing including the bolt insertion portions is shortened.

The details and further improvements of the teaching disclosed herein will be described in the following "DETAILED DESCRIPTION".

### BRIEF DESCRIPTION OF DRAWINGS

FIG. 1 is a perspective view showing an example of a component layout in a front compartment that includes a structure of mounting a power converter in a vehicle in a first embodiment.
FIG. 2 is a side view of a housing and the power converter.
FIG. 3 is a perspective view of a lower portion of a casing.
FIG. 4 is an enlarged side view of a lower portion of a front leg.
FIG. 5 is an enlarged side view of a front leg in a variant.
FIG. 6 is a perspective view of the power converter and a housing in a variant.
FIG. 7 is a side view for explaining a structure of mounting a power converter in a vehicle in a second embodiment.
FIG. 8 is a perspective view of the power converter in the structure in the second embodiment.
FIG. 9 is a side view for explaining a structure of mounting a power converter in a vehicle in a third embodiment.

### DETAILED DESCRIPTION

Representative, non-limiting examples of the present disclosure will now be described in further detail with reference to the attached drawings. This detailed description is merely intended to teach a person of skill in the art further details for practicing preferred aspects of the present teachings and is not intended to limit the scope of the present disclosure. Furthermore, each of the additional features and teachings disclosed below may be utilized separately or in conjunction with other features and teachings to provide improved structures of mounting a power converter in a vehicle.

Moreover, combinations of features and steps disclosed in the following detailed description may not be necessary to practice the disclosure in the broadest sense, and are instead taught merely to particularly describe representative examples of the present disclosure. Furthermore, various features of the above-described and below-described representative examples, as well as the various independent and dependent claims, may be combined in ways that are not specifically and explicitly enumerated in order to provide additional useful embodiments of the present teachings.

All features disclosed in the description and/or the claims are intended to be disclosed separately and independently from each other for the purpose of original written disclosure, as well as for the purpose of restricting the claimed subject matter, independent of the compositions of the features in the embodiments and/or the claims. In addition, all value ranges or indications of groups of entities are intended to disclose every possible intermediate value or intermediate entity for the purpose of original written disclosure, as well as for the purpose of restricting the claimed subject matter.

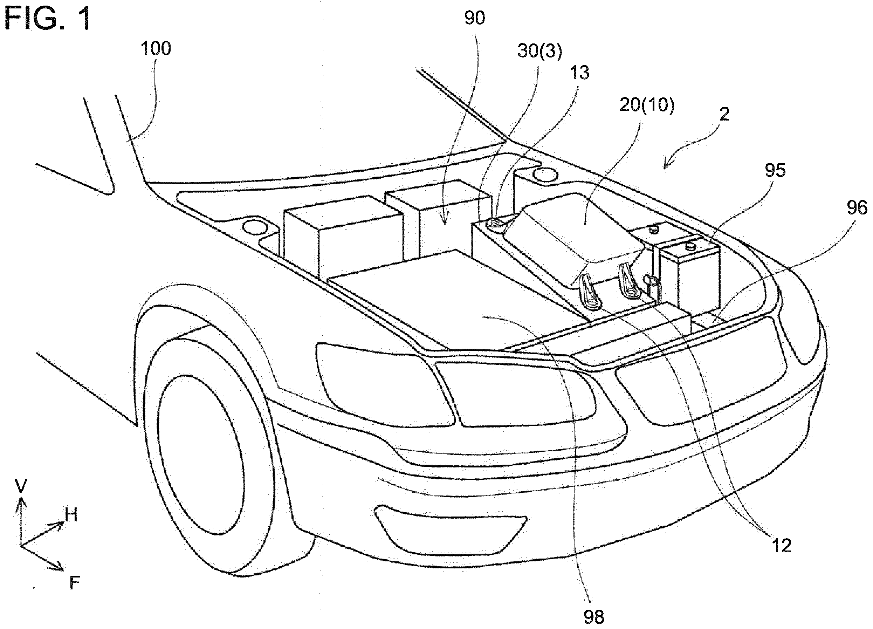

(First Embodiment) With reference to the drawings, a structure 2 of mounting a power converter in a vehicle in a first embodiment will be described. The structure in the embodiment is applied to a hybrid vehicle that includes both of a traction motor and an engine. FIG. 1 shows a component layout in a front compartment 90 of a hybrid vehicle 100. The hybrid vehicle 100 has an engine 98, motors 3, and a power converter 20 mounted in the front compartment 90 of the vehicle. The power converter 20 is a device configured to convert electric power of a main battery, which is not shown, into driving power for the motors 3. In the front compartment 90, the power converter 20 is fixed above a housing 30. The structure 2 in the first embodiment is applied to the power converter 20.

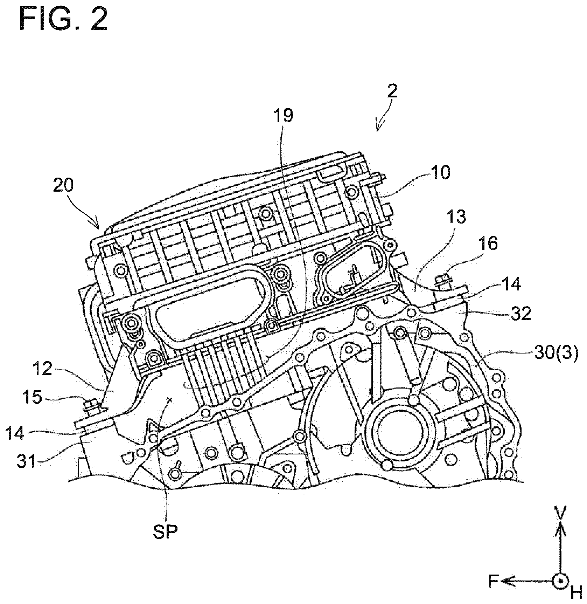

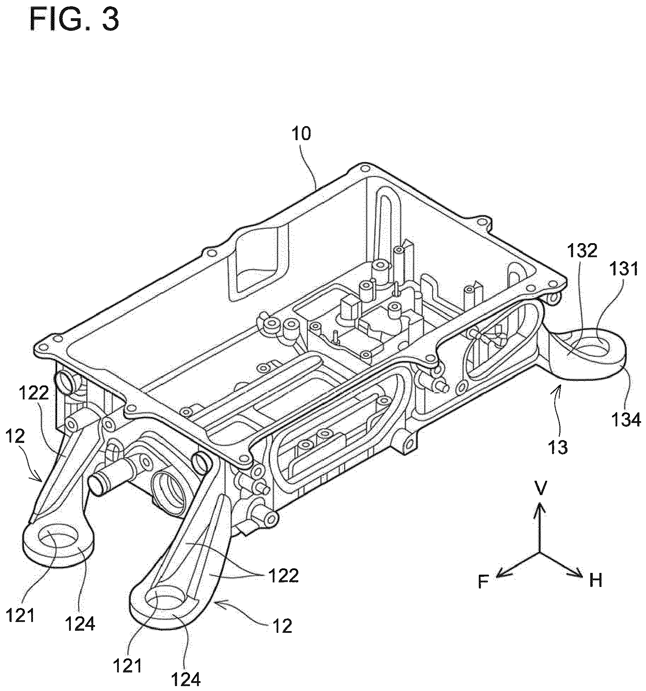

The housing 30 houses the motors 3, a power distribution mechanism, and a differential gear. In addition to the engine 98, the power converter 20, and the housing 30, various devices such as a battery 95 are disposed in the front compartment 90, but description of these devices will be omitted. It should be noted that FIG. 1 schematically depicts the housing 30, the engine 98, and the like. FIG. 1 also depicts the power converter 20 in a simplified manner. For a detailed shape of the power converter 20, FIGS. 2 and 3 should be referred to.

In a coordinate system in the drawing, an F-axis indicates a front direction of the vehicle, a V-axis indicates a vertical direction of the vehicle, and an H-axis indicates a vehicle-width direction (a lateral direction of the vehicle). The meanings of these signs in the coordinate system are the same in the subsequent drawings. Further, expressions such as "front surface", "back surface", "front portion", "back portion", and the like will hereinafter be used for components mounted in the front compartment 90. In these expressions, "front" means a front side of the vehicle, and "back" means a back side of the vehicle.

As described above, the housing 30 houses the power distribution mechanism and the differential gear, in addition to the motors 3. The power distribution mechanism is a gear set configured to combine or distribute output torque of the engine 98 and output torque of the motors 3. According to circumstances, the power distribution mechanism divides the output torque of the engine 98 and transmits it to the differential gear and the motors 3. Since the housing 30 houses the differential gear therein, the housing 30 is, in other words, a casing of the motors and a transaxle. The housing 30 is formed, for example, by aluminum die casting or aluminum machining.

The engine 98 and the housing 30 are coupled to be adjacent to each other in the vehicle-width direction. The engine 98 and the housing 30 bridge side members 96 that ensure structural strength of the vehicle. FIG. 1 only depicts one of the side members 96, however, another side member extends at a lower-left side of the engine 98 in FIG. 1. The engine 98 and the housing 30 bridge the two side members.

As described above, the power converter 20 is a device configured to convert electric power of the main battery, which is not shown, into driving power for the motors 3. More specifically, the power converter 20 boosts a voltage of the electric power of the main battery, and then converts the electric power into AC power having a frequency corresponding to a number of revolutions of the motors. Moreover, the power converter 20 may convert AC power generated by the motors 3 (regenerative electric power) into DC power and may further step down a voltage of the DC power. The electric power, the voltage of which has been stepped down, is used to charge the main battery.

The power converter 20 is supported with a space provided between the power converter 20 and an upper surface of the housing 30, the details of which will be described later. Front legs 12 and back legs 13 extend downward from a casing 10 of the power converter 20, and lower ends of the front legs 12 and lower ends of the back legs 13 are fixed to the housing 30. With reference to FIGS. 2 and 3 as well as FIG. 1, a relation between the housing 30 and the power converter 20 (i.e., the structure 2) will be described in detail. FIG. 2 is a side view of the power converter 20 and the housing 30. The "side view" is a view when seen in the vehicle-width direction (in the H-axis direction in the drawing). FIG. 3 is a perspective view of a lower portion of the casing 10.

The power converter 20 and the housing 30 are electrically connected by six power cables 19. The housing 30 houses two motors 3, and the six power cables 19 transmit two sets of three-phase AC.

The upper surface of the housing 30 is inclined downward toward the front. The upper surface of the housing 30 is provided with a base 31 at its front portion and a base 32 at its back portion.

Meanwhile, two legs (the front legs 12) extend downward from a front portion of the casing 10 for the power converter 20 (see FIG. 3). Each of the front legs 12 is provided with a rib 122 and a flat foot 124. Each rib 122 has its upper end coupled to the front portion of the casing 10 and has its lower end coupled to the foot 124. Each foot 124 has a through hole 121 provided therein. As shown in FIG. 2, each of the front legs 12 is fixed to the base 31 of the housing 30 with a bolt 15. The bolts 15 are disposed such that a longitudinal direction thereof is directed to a vertical direction and pass through the through holes 121 of the front legs 12 (see FIG. 3) to fix the front legs 12.

Two legs (the back legs 13) also extend downward from a back portion of the casing 10. Each of the back legs 13 is provided with a rib 132 and a flat foot 134. Each rib 132 has its upper end coupled to the back portion of the casing 10 and has its lower end coupled to the foot 134. Each foot 134 has a through hole 131 provided therein. As shown in FIG. 2, each of the back legs 13 is fixed to the base 32 of the housing 30 with a bolt 16. The bolts 16 are also disposed such that a longitudinal direction thereof is directed to the vertical direction and pass through the through holes 131 of the back legs 13 (see FIG. 3) to fix the back legs 13.

The front legs 12 and the back legs 13 are integrally configured with the casing 10. Specifically, the front legs 12 and the back legs 13 are integrally configured with the casing 10 by aluminum injection molding. The front legs 12 and the back legs 13 integrally configured with the casing 10 can be realized at a low cost.

The casing 10 is supported above the housing 30 by the front legs 12 and the back legs 13 that extend downward therefrom, with a space SP provided between the casing 10 and the housing 30. Moreover, vibration isolators 14 are interposed between the base 31 (the housing 30) and the front legs 12. The vibration isolators 14 are also interposed between the base 32 (the housing 30) and the back legs 13. The casing 10 is supported by the housing 30 via the vibration isolators 14. The vibration isolators 14 attenuate vibrations transmitted from the housing 30 to the casing 10.

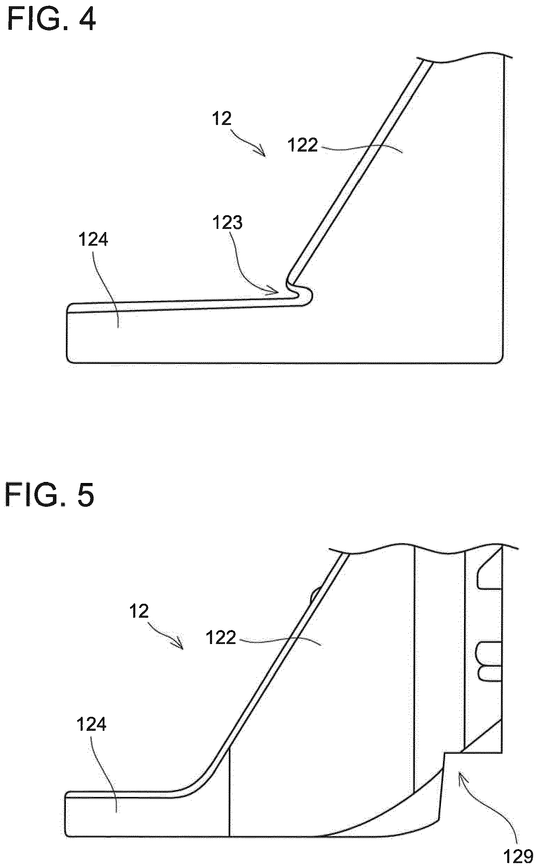

FIG. 4 shows an enlarged side view of a lower portion of one of the front legs 12. A notch 123 (a weak portion) is provided at a boundary between the foot 124 and the rib 122. The front leg 12 is configured to break or deform from the notch 123 (the weak portion) that serves as a starting point, prior to break of fixed portions between the front legs 12 and the housing 30 (i.e., the base 31), when crash load is applied to the casing 10. When the front leg 12 breaks or deforms from the notch 123 (the weak portion) serving as the starting point upon crash load being applied, break of the fixed portions between the front legs 12 and the housing 30 (i.e., the base 31) can be avoided. If break of the housing 30 occurs, a high-voltage component in the housing 30 (a component of the motors 3) may be exposed. Such break of the housing 30 can be prevented in the structure 2 in the embodiment.

The notch 123 (the weak portion) only needs to be provided in at least one of the four legs. When one of the front legs 12 breaks or deforms, a load applied to the other legs increases, as a result of which the other legs break or deform successively in a chain-reaction manner. Consequently, the casing 10 is moved backward and an impact on the casing 10 is mitigated. Each of all the legs may be provided with the notch 123 (the weak portion).

FIG. 5 shows a side view of one of the front legs 12 in a variant. As shown in FIG. 5, the weak portion may be a notch 129 provided on a back side of the rib 122.

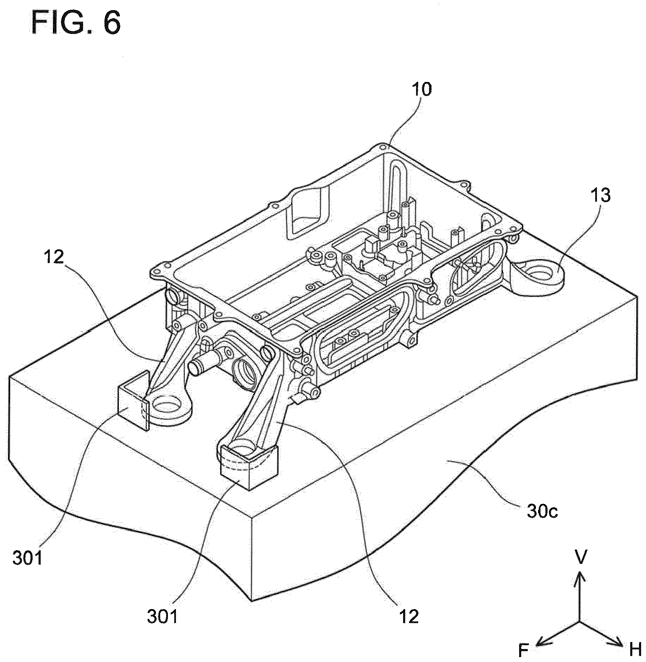

FIG. 6 shows a perspective view of the casing 10 for the power converter 20 and a housing 30c in a variant. FIG. 6 depicts the housing 30c in a simplified manner. The housing 30c includes walls 301 at a front portion of its upper surface. The walls 301 respectively engage with the front legs 12. When the power converter 20 is to be fixed, the power converter 20 is placed above the housing 30c with the front legs 12 contacting the walls 301. Since the walls 301 support the power converter 20, the power converter 20 stays above the housing 30c even without bolts. In this state, bolts for fixing the casing 10 can be attached to the housing 30c. With the walls 301 provided, work for fixing the power converter 20 to the housing 30 can be facilitated.

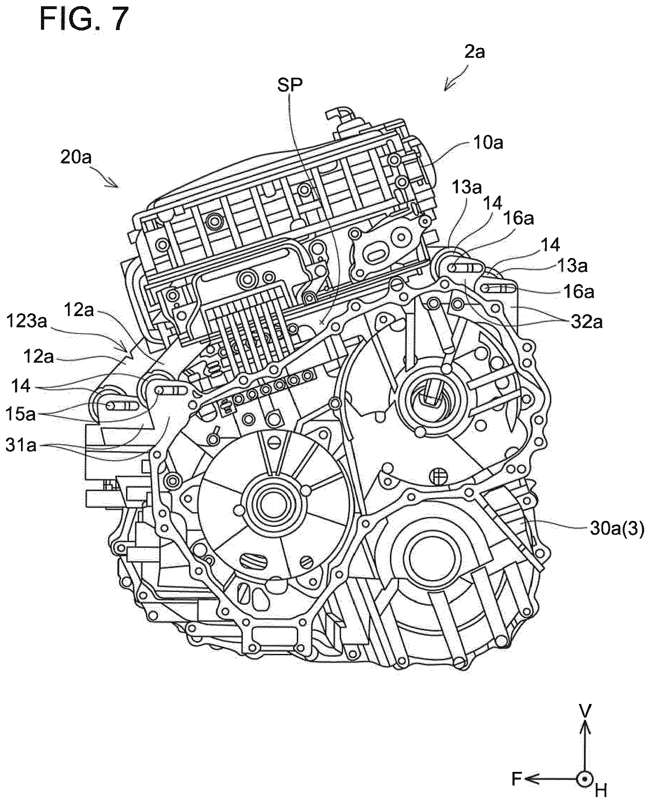

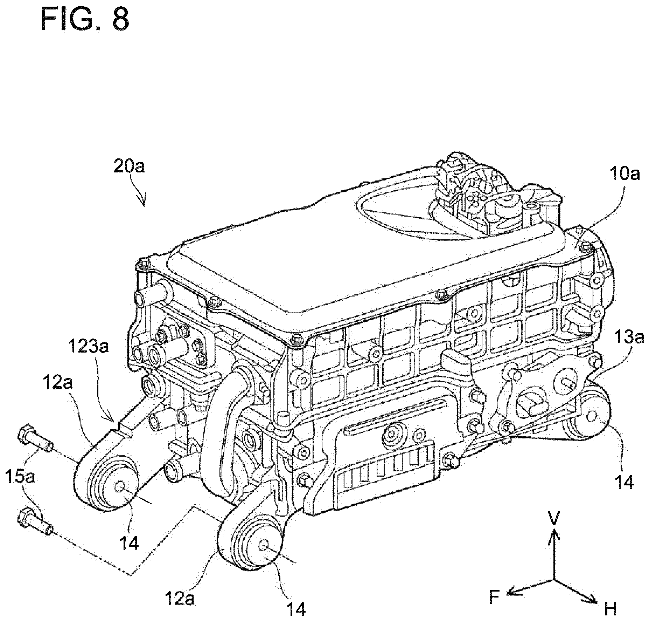

(Second Embodiment) With reference to FIGS. 7 and 8, a structure 2a of mounting a power converter in a vehicle in a second embodiment will be described. FIG. 7 is a side view of a power converter 20a and a housing 30a. FIG. 8 is a perspective view of the power converter 20a. A casing 10a for the power converter 20a is provided with legs (front legs 12a and back legs 13a). The front legs 12a extend downward from a front portion of the casing 10a. The back legs 13a extend downward from a back portion of the casing 10a. The front legs 12a and the back legs 13a are integrally configured with the casing 10a.

Vertical walls 31a are provided at an upper front portion of the housing 30a. The front legs 12a are fixed to the vertical walls 31a of the housing 30a with bolts 15a. The bolts 15a are fixed to the vertical walls 31a of the housing 30a with a longitudinal direction of the bolts 15a directed to a lateral direction of the vehicle.

Additionally, vertical walls 32a are provided at an upper back portion of the housing 30a. The back legs 13a are fixed to the vertical walls 32a of the housing 30a with bolts 16a that are disposed such that a longitudinal direction of the bolts 16a is directed to the lateral direction of the vehicle. Lower ends of the front legs 12a and lower ends of the back legs 13a are fixed to the housing 30a with the space SP provided between a lower surface of the casing 10a and the housing 30a.

A notch 123a is provided in one of the front legs 12a. When crash load is applied to the casing 10a, the front leg 12a breaks or deforms from the notch 123a prior to break of fixed portions between the legs and the housing 30a. When the one front leg 12a breaks or deforms, a load applied to the remaining legs increases. Consequently, the remaining legs also break or deform successively. In the structure 2a, as in the structure 2 in the first embodiment, break of the housing 30a can be avoided, and an impact applied to the casing 10a is mitigated due to the casing 10a being moved.

Each of the front legs 12a is fixed to the housing 30a with the vibration isolator 14 interposed therebetween. Each of the back legs 13a is also fixed to the housing 30a with the vibration isolator 14 interposed therebetween.

In the structure 2 in which the longitudinal direction of the bolts 15, 16 is directed to the vertical direction (the first embodiment) and the structure 2a in which the longitudinal direction of the bolts 15a, 16a is directed to the lateral direction of the vehicle (the second embodiment), work for inserting the bolts is facilitated.

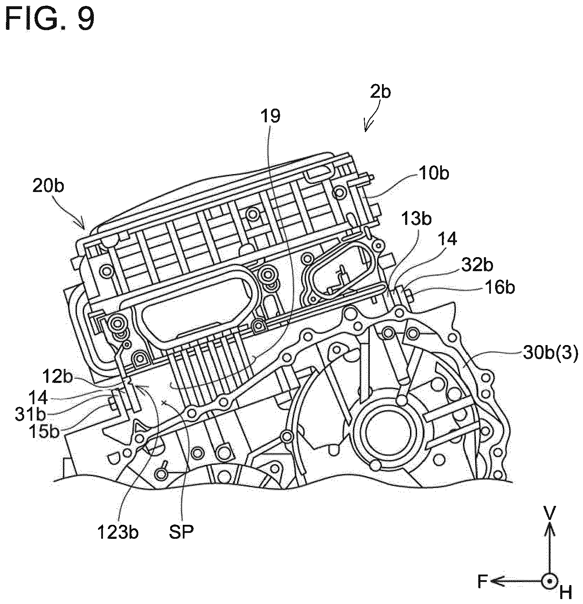

(Third Embodiment) With reference to FIG. 9, a structure 2b of mounting a power converter in a vehicle in a third embodiment will be described. FIG. 9 is a side view showing a relation between a power converter 20b and a housing 30b (i.e., the structure 2b). A casing 10b for the power converter 20b is provided with legs (front legs 12b and back legs 13b). The front legs 12b extend downward from a front portion of the casing 10b. The back legs 13b extend downward from a back portion of the casing 10b. The front legs 12b and the back legs 13b are integrally configured with the casing 10b.

A vertical wall 31b is provided at an upper front portion of the housing 30b. The front legs 12b are fixed to the vertical wall 31b of the housing 30b with bolts 15b. The bolts 15b are fixed to the housing 30b such that a longitudinal direction of the bolts 15b is directed to a front-back direction of the vehicle. Additionally, a vertical wall 32b is provided at an upper back portion of the housing 30b. The back legs 13b are fixed to the vertical wall 32b of the housing 30b with bolts 16b. The bolts 16b are fixed to the housing 30b such that a longitudinal direction of the bolts 16b is directed to the front-back direction of the vehicle. Lower ends of the front legs 12b and lower ends of the back legs 13b are fixed to the housing 30b, and thereby the space SP is ensured between a lower surface of the casing 10b and the housing 30b. In the structure 2b in which the longitudinal direction of the bolts 15b, 16b is directed to the front-back direction of the vehicle, an overall length of the casing 10b including the legs (the front legs 12b and the back legs 13b) can be shortened.

The vibration isolators 14 are interposed between the vertical wall 31b of the housing 30b and the front legs 12b, and the vibration isolators 14 are also interposed between the vertical wall 32b and the back legs 13b.

A notch 123b is provided in one of the front legs 12b. When crash load is applied to the casing 10b, the front leg 12b breaks or deforms from the notch 123b prior to break of fixed portions between the legs and the housing 30b. When the one front leg 12b breaks or deforms, a load applied to the remaining legs increases. Consequently, the remaining legs also break or deform successively. In the structure 2b as well, as in the structure 2 in the first embodiment, break of the housing 30b can be avoided, and an impact applied to the casing 10b is mitigated due to the casing 10b being moved.

Some points to be noted regarding to the teaching described in the embodiments will be listed. The structures disclosed herein may be applied to a power converter mounted in a back portion of a vehicle. The weak portion (notch) may be provided in one of the legs or in each of the legs.

## Claims

1. A structure (2, 2a, 2b) of mounting a power converter (20, 20a, 20b) in a vehicle (100), the structure comprising:
a converter casing (10, 10a, 10b) of the power converter (20, 20a, 20b), the converter casing (10, 10a, 10b) including legs (12, 12a, 12b, 13, 13a, 13b) connected to the converter casing (10, 10a, 10b) and extending downward; and
a motor housing (30, 30a, 30b, 30c) that houses a traction motor (3),
**characterized in that**:
the legs (12, 12a, 12b, 13, 13a, 13b) are integrally configured with the converter casing (10, 10a, 10b);
lower ends of the legs (12, 12a, 12b, 13, 13a, 13b) are fixed to an upper portion of the motor housing (30, 30a, 30b, 30c) with a space provided between the motor housing (30, 30a, 30b, 30c) and a lower surface of the converter casing (10, 10a, 10b), and
a weak portion (123, 123a, 123b, 129) is provided in at least one of the legs (12, 12a, 12b, 13, 13a, 13b), the weak portion (123, 123a, 123b, 129) configured to break or deform prior to break of fixed portions between the legs (12, 12a, 12b, 13, 13a, 13b) and the motor housing (30, 30a, 30b, 30c) when crash load is applied to the converter casing (10, 10a, 10b).

2. The structure (2, 2a, 2b) according to claim 1, **characterized in that** the weak portion (123, 123a, 123b, 129) is a notch (123, 123a, 123b, 129) provided in the at least one of the legs (12, 12a, 12b, 13, 13a, 13b).

3. The structure (2, 2a, 2b) according to claim 1, **characterized in that** vibration isolators (14) are provided between the motor housing (30, 30a, 30b, 30c) and the legs (12, 12a, 12b, 13, 13a, 13b).

4. The structure (2) according to any one of claims 1 to 3,
**characterized in that**:
each of the legs (12,13) is fixed to the motor housing (30) with a bolt (15, 16),
the bolts (15, 16) are fixed to the motor housing (30) such that a longitudinal direction of the bolts (15, 16) is directed to a vertical direction.

5. The structure (2a) according to any one of claims 1 to 3,
**characterized in that**:
each of the legs (12a,13a) is fixed to the motor housing (30a) with a bolt (15a, 16a),
the bolts (15a, 16a) are fixed to the motor housing (30a) such that a longitudinal direction of the bolts (15a, 16a) is directed to a lateral direction of the vehicle.

6. The structure (2b) according to any one of claims 1 to 3,
**characterized in that**:
each of the legs (12b,13b) is fixed to the motor housing (30b) with a bolt (15b, 16b),
the bolts (15b, 16b) are fixed to the motor housing (30b) such that a longitudinal direction of the bolts (15b, 16b) is directed to a front-back direction of the vehicle.
